(19) Europäisches Patentamt
European Patent Office
Office européen des brevets

(11) Veröffentlichungsnummer: **0 159 729**
**B1**

(12) # EUROPÄISCHE PATENTSCHRIFT

(45) Veröffentlichungstag der Patentschrift: **18.01.89**

(51) Int. Cl.⁴: **C 08 G 77/38,** C 09 D 3/82, C 03 C 25/02

(21) Anmeldenummer: **85200307.8**

(22) Anmeldetag: **04.03.85**

(54) **Härtbare Kunststoffzusammensetzung.**

(30) Priorität: **07.03.84 NL 8400726**

(43) Veröffentlichungstag der Anmeldung:
**30.10.85 Patentblatt 85/44**

(45) Bekanntmachung des Hinweises auf die Patenterteilung:
**18.01.89 Patentblatt 89/3**

(84) Benannte Vertragsstaaten:
**DE FR GB IT NL SE**

(56) Entgegenhaltungen:
**EP-A- 0 025 800**
**EP-A- 0 097 333**
**DE-C- 895 650**
**FR-A- 2 145 954**

**FARBE UND LACK, Band 88, 8. August 1982, Seiten 632-635, Hannover, DE; A. JÄGER u.a.: "Strahlenhärtung von Siliconen"**

(73) Patentinhaber: **N.V. Philips' Gloeilampenfabrieken, Groenewoudseweg 1, NL-5621 BA Eindhoven (NL)**

(72) Erfinder: **Broer, Dirk Jan, p/a INT. OCTROOIBUREAU B.V. Prof. Holstlaan 5, NL-5656 AA Eindhoven (NL)**
Erfinder: **Mol, Grietje Neeltje, p/a INT. OCTROOIBUREAU B.V. Prof Holstlaan 5, NL-5656 AA Eindhoven (NL)**

(74) Vertreter: **Auwerda, Cornelis Petrus et al, INTERNATIONAAL OCTROOIBUREAU B.V. Prof. Holstlaan 6, NL-5656 AA Eindhoven (NL)**



Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

**Beschreibung**

Die Erfindung bezieht sich auf eine härtbare Kunststoffzusammensetzung zum Bedecken optischer Glasfasern mit einem Kopolymer, das als monomere Einheiten Dimethylsiloxan und mindestens ein Siloxan aus der Gruppe, die durch Methylphenylsiloxan und Diphenylsiloxan gebildet ist, enthält.

Eine derartige Kunststoffzusammensetzung ist aus der US-Patentschrift 4 270 840 bekannt. Diese Kunststoffzusammensetzung kann durch Temperaturerhöhung mittels einer Reaktion zwischen Vinylgruppen (0,5 bis 3 Gew.%) unter dem Einfluss einer Platinverbindung als Katalysator ausgehärtet werden. Um eine grössere Geschwindigkeit der Aushärtung zu erzielen, kann auch durch Bestrahlung mit Licht unter dem Einfluss einer Benzoinverbindung als Initiator ausgehärtet werden. Im letzteren Fall müssen ausser Vinylgruppen auch Mercaptogruppen oder Akrylgruppen als mitreagierende Gruppen vorhanden sein. Härtbare Kunststoffzusammensetzungen der obenstehend beschriebenen Art enthalten keine Lösungsmittel, so dass beim Aushärten dem Material keine Stoffe entfernt zu werden brauchen. Dadurch kann schnell und ohne Umweltbelastung ausgehärtet werden.

Eine Kunststoffzusammensetzung nach der obengenannten US-Patentschrift hat vor dem Aushärten eine kinematische Viskosität zwischen $5.10^{-4}$ und 1 $m^2/s$. Nach dem Aushärten hat diese Kunststoffzusammensetzung einen Elastizitätsmodul, der kleiner als 2 MPa ist, und eine Brechzahl $n_D$ bei 25 °C zwischen 1,40 und 1,52. Die Brechzahl lässt sich durch die Wahl des Verhältnisses zwischen den Mengen an Dimethylsiloxan und Methylphenylsiloxan in dem Kopolymer einstellen. Beim Bedecken optischer Glasfasern kann eine Bedeckungsgeschwindigkeit von 0,5 bis 2 m/s. erreicht werden.

Die Erfindung hat die Aufgabe, eine härtbare Kunststoffzusammensetzung mit einer Aushärtezeit, die kürzer als 5 Sekunden, vorzugsweise kürzer als 0,5 Sekunden ist, zu schaffen. Dadurch wird beispielsweise beim Bedecken optischer Glasfasern eine Bedeckungsgeschwindigkeit möglich, die grösser als 5 m/s ist.

Die Erfindung hat ausserdem die Aufgabe, eine härtbare Zusammensetzung aus Kunststoff zu schaffen, die in einer homogenen Schicht ohne Tropfenbildung auf einem sich schnell bewegenden Substrat angebracht werden kann.

Die Erfindung hat weiterhin die Aufgabe, eine härtbare Kunststoffzusammensetzung zu schaffen, die nach dem Aushärten ein Material mit einem Elastizitätsmodul zwischen 0,1 und 10 MPa und mit einer Brechzahl über 1,46, vorzugsweise über 1,48, bildet.

Die Erfindung hat ferner die Aufgabe, eine härtbare Kunststoffzusammensetzung mit einer niedrigen Glasübergangstemperatur, vorzugsweise unter −50 °C zu schaffen mit dem ergänzenden Erfordernis, dass das Material bei Temperaturen bis 250 °C nicht fliessen darf.

Diese Aufgaben werden nach der Erfindung durch eine härtbare Kunststoffzusammensetzung gelöst, welche bis 20 Gew.% einer oder mehrerer monomerer Akrylatverbindungen enthält und, die ein Kopolymer enthält, das eine Verbindung der nachstehenden Formel ist:

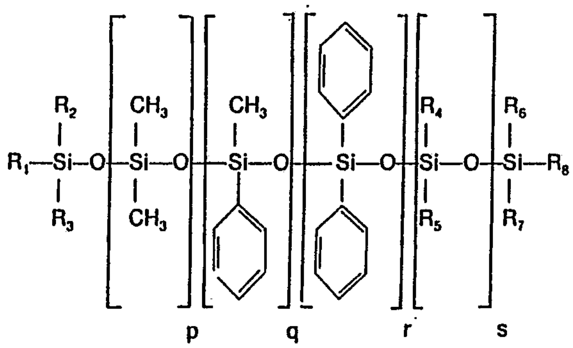

worin $R_1$ und $R_8$ organische Gruppen sind, die aus der Gruppe gewählt sind, die durch Alkylgruppen, Arylgruppen und akrylatesterhaltige Alkylgruppen gebildet wird, worin $R_2$, $R_3$, $R_4$, $R_6$ und $R_7$ organische Gruppen sind, die aus der Gruppe gewählt sind, die durch Alkylgruppen und Arylgruppen gebildet wird, und worin $R_5$ eine akrylatesterhaltige organische Gruppe ist, wobei das mittlere Molekargewicht der Polymermoleküle zwischen 1000 und 1 000 000 liegt, wobei die mittleren Fraktionen der monomeren Einheiten je Polymermolekül innerhalb der folgenden Grenzen liegen:

$0{,}005 \leq p \leq 0{,}995$
$0 \leq q \leq 0{,}995$
$0 \leq r \leq 0{,}49$
$0 \leq s \leq 0{,}1$,

wobei $0{,}005 \leq (q + 2r) \leq 0{,}995$ ist und wobei die monomeren Einheiten blockweise, alternierend oder beliebig in dem Molekül verteilt sein können und wobei das Kopolymer mindestens zwei Akrylatestergruppen je Molekül enthält.

Eine akrylatesterhaltige Alkylgruppe ist eine Gruppe der folgenden Formel:

$$-R_9-O-\underset{\displaystyle O}{\underset{\|}{C}}-CH=CH_2$$

worin $R_9$ ein Alkylenrest ist, beispielsweise $-(CH_2)_n-$, worin $n \leq 1$ ist.

Bei einer blockartigen Verteilung monomerer Einheiten in einem Kopolymermolekül befinden sich die identischen monomeren Einheiten in einer oder in mehreren Gruppen, die mit einer oder mehreren Gruppen verbunden sind, die aus anderen monomeren Einheiten aufgebaut sind. Bei einer alternierenden Verteilung monomerer Einheiten in einem Kopolymermolekül gibt es einen im wesentlichen regelmässigen Aufbau, wobei nur ein Typ monomerer Einheiten in der Polymerkette und jeweils ein anderer Typ monomerer Einheiten einander abwechseln. Bei einer beliebigen Verteilung monomerer Einheiten in einem Kopolymermolekül sind die jeweiligen Typen monomerer Einheiten in Gruppen abwechselnder Länge und Zusammensetzung beliebig in der Polymerkette verteilt.

In der EP-A-97 333 werden photopolymerisierbare Organopolysiloxane mit verhältnismässig niedrigem Molekulargewicht beschrieben, welche an Si gebundene H-Atome aufweisen, beispielsweise auch zur Verwendung auf Glasfasern. Die benötigte Bestrahlungszeit beträgt nach den Vorbildern ungefähr 7 bis 12 Sekunden.

In einem Artikel von A. Jäger u.a. in Farbe und Lack, 88 (8), Seiten 632–635 (August 1982) wird ein Verfahren beschrieben wobei die Strahlungshärtbarkeit von Polysiloxane verbessert wird durch Modifizierung mit akrylatesterhaltigen Alkylgruppen.

In einer geeigneten härtbaren Kunststoffzusammensetzung nach der Erfindung ist $R_5$ eine akrylatesterhaltige Alkylgruppe.

Die Aushärtungsgeschwindigkeit ist gross, wenn ein nicht zu geringer Wert von s gewählt wird. Die reaktiven Gruppen $R_5$ in der Mitte der Polymerkette haben zwar eine geringere Beweglichkeit und dadurch eine geringere Reaktionsgeschwindigkeit als die endständigen Gruppen $R_1$ und $R_8$, aber bei einer ausreichend grossen Anzahl gibt es dennoch eine spürbare Verringerung der Aushärtungszeit. In einer geeigneten Ausführungsform einer härtbaren Kunststoffzusammensetzung nach der Erfindung ist s grösser als 0,02.

In einer anderen geeigneten härtbaren Kunststoffzusammensetzung nach der Erfindung sind r und s gleich Null und sind $R_1$ und $R_8$ akrylatesterhaltige Alkylgruppen.

Eine grosse Aushärtungsgeschwindigkeit lässt sich auch erreichen, wenn mehr als zwei reaktive Endgruppen in dem Molekül vorhanden sind, weil das Polymermolekül verzweigt ist. Dies kann nach der Erfindung erreicht werden, wenn $R_5$ eine akrylatesterhaltige Polysiloxankette von dem selben Typ und mit derselben mittleren Zusammensetzung wie die Hauptkette des Polymermoleküls ist.

Eine Kunststoffzusammensetzung nach der Erfindung kann durch Bestrahlung mit UV-Licht oder durch Bestrahlung mit Elektronen ausgehärtet werden. Wenn durch Bestrahlung mit UV-Licht ausgehärtet wird, muss der Kunststoffzusammensetzung ein lichtempfindlicher Initiator zugefügt werden.

Um eine ausreichend grosse Menge eines derartigen Initiators in der härtbaren Kunststoffzusammensetzung lösen zu können, ist es erwünscht, dass $(q + 2r)$ grösser als 0,3 ist. Dadurch wird erreicht, dass genügend aromatische Gruppen (Phenylgruppen) vorhanden sind, um die Löslichkeit des Initiators zu gewährleisten.

Eine geeignete mit UV-Licht härtbare Kunststoffzusammensetzung wird erhalten, wenn die Kunststoffzusammensetzung 1 bis 5 Gew.% eines lichtempfindlichen Initiators enthält, zum Beispiel aus der Gruppe, die durch 2,2-Dimethoxy-2-phenylacetophenon, 2,2-Diäthoxyacetophenon und 2,2-Dimethyl-2-hydroxyacetophenon gebildet wird, sie Figur 2a bis 2c.

Eine besonders hohe Geschwindigkeit der Aushärtung wird erreicht, wenn die Kunststoffzusammensetzung eine oder mehrere monomere Akrylatverbindungen enthält. Um dabei die übrigen gewünschten Eigenschaften nicht zu beeinträchtigen, ist es zweckmässig, dass die Kunststoffzusammensetzung bis 20 Gew.% einer oder mehrerer monomerer Akrylatverbindungen enthält.

In einer geeigneten Ausführungsform sind die monomeren Akrylatverbindungen aus der Gruppe gewählt, die durch Hexandioldiakrylat, 2-Äthoxyäthylakrylat, 2'-Äthoxy-2-äthoxyäthylakrylat und Trimethylolpropantriakrylat gebildet wird.

Die Aufgabe, ein geeignetes Verfahren zu schaffen, wird nach der Erfindung durch ein Verfahren gelöst, das die folgenden Schritte aufweist:

a) es wird eine Lösung zubereitet, die Dichlordimethylsilan, eine Karbonsäure und eine oder mehrere Verbindungen aus der folgenden Gruppe enthält: Dichlormethylphenysilan, Dichlordiphenylsilan, Dichlormonomethylwasserstoffsilan, Monochlordimethylwasserstoffsilan, Trichlormethylsilan und Trichlorphenylsilan, dies in einem Verhältnis, das der gewünschten Zusammensetzung des Kopolymers entspricht,

b) der Lösung wird eine äquivalente Menge eines Alkanols zugefügt, wodurch Hydrolyse und Polymerisation auftreten,

c) die Lösung wird erwärmt, bis die Hydrolyse nahezu vollendet ist,

d) das hochmolekulare Zwischenerzeugnis wird auf bekannte Weise von Nebenerzeugnissen und dem Lösungsmittel getrennt,

e) das hochmolekulare Zwischenerzeugnis wird gelöst und es wird ein Katalysator hinzugefügt,

f) es wird eine äquivalente Menge eines ungesättigten Alkanols hinzugefügt,

g) die Lösung wird erwärmt, bis die Reaktion nahezu vollendet ist,

h) der Katalysator wird entfernt,

i) der Lösung wird Akrylsäurechlorid hinzugefügt,

j) die Lösung wird erwärmt, bis die Reaktion nahezu vollendet ist, wobei das gebildete HCl auf bekannte Weise aus der Lösung entfernt wird,

k) das Erzeugnis wird auf bekannte Weise von der Nebenerzeugnissen getrennt und gereinigt.

Ein Ausführungsbeispiel der Erfindung wird anhand der Zeichnung näher beschrieben. Es zeigen

Figur 1 eine schematische Darstellung eines Verfahrens zur Herstellung eines Kopolymers für eine härtbare Kunststoffzusammensetzung,

Figur 2a 2,2-Dimethoxy-2-Phenylacetophenon,

Figur 2b, 2,2-Diäthoxyacetophenon,

Figur 2c 2,2-Dimethyl-2-Hydroxyacetophenon,

Figur 3a Hexandioldiakrylat,

Figur 3b 2-Äthoxyäthylakrylat,

Figur 3c 2'-Äthoxy-2-Äthoxyäthylakrylat und

Figur 3d Trimethylolpropantriakrylat.

Verfahren zur Herstellung eines Kopolymers (Figur 1)

Dichlordimethylsilan (a), Dichlormethylphenysilan (b) und Monochlordimethylwasserstoffsilan (c) werden in Essigsäure gelöst, und zwar in einem Verhältnis, das der gewünschten Zusammensetzung des Kopolymers entspricht. Auch andere Lösungsmittel können verwendet werden. Für die gewünschte Reaktion ist eine Karbonsäure notwendig. Die Verwendung von Essigsäure als Lösungsmittel und als Reaktant bietet den Vorteil, dass die Polymerisationsreaktion einen grossen Anteil hochmolekularer nichtzyklischer Polysiloxanmoleküle liefert. Die Lösung wird unter einem Rückflusskühler auf dem Siedepunkt gehalten, wobei unter Rühren eine äquivalente Menge Methanol hinzugetropft wird. Die Verwendung von Methanol bietet gegenüber anderen Alkanolen den Vorteil, dass das Nebenerzeugnis der Reaktion bei einer relativ niedrigen Temperatur entfernt werden kann.

Die Lösung wird 2 Stunden lang auf dem Siedepunkt gehalten, wobei Hydrolyse und Polymerisation auftreten. Danach werden bei einer Temperatur von 58 °C das gebildete Methylazetat und bei einer Temperatur von 150 °C und einem Druck von $2.10^4$ Pa die niedrigmolekularen und niedrigen zyklischen Siloxane abdestilliert. Das Verhältnis a/b bestimmt das Verhältnis p/q in dem Erzeugnis. Das Verhältnis c/(a+b) bestimmt das Molekulargewicht des Enderzeugnisses.

Ausser den obenstehend genannten Silanen kann auch Dichlordiphenylsilan verwendet werden, mit dem Diphenylsiloxangruppen in das Kopolymer eingebaut werden, r ist dann ungleich null. Um reaktive akrylatesterhaltige Alkylgruppen $R_5$ in das Molekül einzubauen, muss Dichlormonomethylwasserstoffsilan zugefügt werden. Um eine verzweigte Polymerkette zu bilden kann Trichlormethylsilan oder Trichlorphenylsilan hinzugefügt werden, wobei die verwendete Menge nicht zu gross sein darf, da sonst Gelbildung auftritt.

Das hochmolekulare Zwischenerzeugnis wird in Diäthyläther zusammen mit einer katalytischen Menge Hexachlorplatinsäure gelöst. Auch andere Lösungsmittel, beispielsweise Tetrahydrofuran, können verwendet werden. Als katalytische Menge ist bereits eine Menge von einigen Milligramm je Liter wirksam. Statt Hexachlorplatinsäure kann auch eine andere Platinverbindung, beispielsweise ein organischer Ester von Platinsäure, oder eine Palladiumverbindung verwendet werden. Die Lösung wird unter einem Rückflusskühler auf dem Siedepunkt gehalten, während unter Rühren eine äquivalente Menge Allylalkohol hinzugetropft wird. Die Lösung wird vier Stunden lang auf dem Siedepunkt gehalten, wonach der Katalysator filtriert wird.

Die Lösung wird unter einem Rückflusskühler auf dem Siedepunkt gehalten, während unter Rühren eine äquivalente Menge von Triäthylamin und Akrylsäurechlorid hinzugetropft wird. Die Lösung wird 2 Stunden lang auf dem Siedepunkt gehalten, wonach das gebildete Triäthylammoniumchlorid abfiltriert wird. Um das gebildete HCl zu binden, kann auch eine andere stickstoffhaltige organische Base hinzugefügt werden. Auch ist es möglich, ein Gas, beispielsweise Luft, durch die Lösung hindurchzuleiten wodurch das gebildete HCl entfernt wird.

Das Erzeugnis kann dadurch gereinigt werden, dass beispielsweise zweimal mit 0,2 N NaOH gewaschen wird, wonach über wasserfreiem $MgSO_4$ getrocknet wird. Nach Abdampfen des Lösungsmittels ist das Kopolymer gebrauchsfertig. Bei längerem Aufbewahren ist es zweckmässig, dem Kopolymer einen Stabilisator hinzuzufügen beispielsweise 50 ppm Hydrochinonmonomethyläther.

Von dem obenstehend beschriebenen Verfahren gibt es selbstverständlich eine Anzahl auf der Hand liegender Abwandlungen, wobei das Wesentliche der Erfindung nicht verlassen wird. Statt durch Destillation kann das Zwischen- oder Enderzeugnis beispielsweise auch durch Extraktion abgetrennt werden.

Ausführungsbeispiele härtbarer Kunststoffzusammensetzungen nach der Erfindung

Die Geschwindigkeit des Aushärtens wird vergrössert, wenn der härtbaren Kunststoffzusammensetzung eine mitreagierende monomere Akrylatverbindung zugefügt wird. Die Wirkung der Hinzufügung von Hexandioldiakrylat (HDDA, Fig. 3a), 2'-Äthoxy-2-Äthoxyäthylakrylat (EEEA, Fig. 3c) oder Trimethylolpropantriakrylat (TMPTA, Fig. 3d) geht aus der Tafel hervor, in der auch einige Eigenschaften der erhaltenen ausgehärteten Materialien erwähnt sind. Das verwendete Kopolymer ist dasselbe, dessen Herstellung oben beschrieben ist ($M_n = 14\,000$, p = q = 0,49, s = 0,02). Die Aushärtezeit ist die Zeit, die notwendig ist, um eine klebfreie Oberfläche beim Aushärten mit UV-Licht mit einer Lampe wie obenstehend beschrieben zu erhalten.

Tafel

| HDDA (Gew.%) | EEEA (Gew.%) | TMPTA (Gew.%) | Aushärtezeit (s) | $T_g$ (°C) | $n_D^{25}$ |
|---|---|---|---|---|---|
| 0 | 0 | 0 | 4,8 | –60 | 1,503 |
| 10 | 0 | 0 | 0,12 | –57 | 1,504 |
| 20 | 0 | 0 | 0,06 | –57 | 1,505 |
| 0 | 10 | 0 | 2,4 | –60 | 1,500 |
| 0 | 20 | 0 | 2,3 | –60 | 1,496 |
| 0 | 0 | 20 | 0,05 | –57 | 1,507 |

Die Zunahme der Reaktionsgeschwindigkeit ist überraschend gross, namentlich wenn Hexandioldiakrylat oder Trimethylolpropantriakrylat hinzugefügt ist. Bei einer Hinzufügung von 0 bis 20 Gew.% eines monomeren Akrylats nimmt die Glasübergangstemperatur nur wenig zu, so dass die gummiartigen Eigenschaften des ausgehärteten Erzeugnissens nicht beeinträchtigt werden. Der geringe Einfluss auf die Brechzahl kann dazu benutzt werden, die Brechzahl innerhalb enger Grenzen auf einen gewünschten Wert zu bringen.

Der härtbaren Kunststoffzusammensetzung können weiterhin noch übliche Füllmittel hinzugefügt werden, wie beispielsweise $SiO_2$ mit einer spezifischen Oberfläche von 400 $m^2/g$. Auch können Flussverbesserer hinzugefügt werden, beispielsweise Hexamethyldisiloxan, Akryloxypropylpentamethyldisiloxan und Diakryloxypropyltetramethyldisiloxan.

Die erfindungsgemäss härtbare Kunststoffzusammensetzung zeigt zwar eine grosse Aushärtegeschwindigkeit, ist aber dennoch vor dem Gebrauch stabil und kann folglich lange Zeit aufbewahrt werden. Die Benetzungseigenschaften sind gut (keine Tropfenbildung), auch wenn die härtbare Kunststoffzusammensetzung an einer Oberfläche eines Materials mit einer hohen Temperatur angebracht wird. Ausserdem haben die beschriebenen Kunststoffzusammensetzungen den Vorteil, dass oberhalb der Glasübergangstemperatur keine Kristallisierung auftritt, auch nicht bei niedrigen Temperaturen in der Nähe der Glasübergangstemperatur, so dass der Elastizitätsmodul auch dort einen niedrigen Wert hat.

**Patentansprüche**

1. Härtbare Kunststoffzusammensetzung zum Bedecken optischer Glasfasern mit einem Kopolymer, das als monomere Einheiten Dimethylsiloxan und mindestens ein Siloxan aus der Gruppe, die durch Methylphenylsiloxan und Diphenylsiloxan gebildet wird, ehthält, dadurch gekennzeichnet, dass die Kunststoffzusammensetzung bis 20 Gew.% einer oder mehrerer monomerer Akrylatverbindungen enthält und dass das Kopolymer eine Verbindung der folgenden Formel ist:

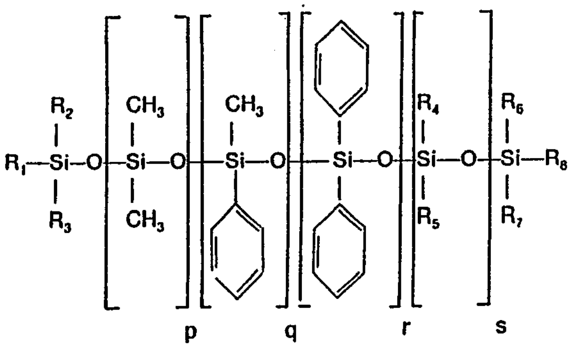

worin $R_1$ und $R_8$ organische Gruppen sind, die aus der Gruppe gewählt sind, die durch Alkylgruppen, Arylgruppen und akrylatesterhaltige Alkylgruppen gebildet wird, worin $R_2$, $R_3$, $R_4$, $R_6$ und $R_7$ organische Gruppen sind, die aus der Gruppe gewählt sind, die durch Alkylgruppen und Arylgruppen gebildet wird, und worin $R_5$ eine akrylatesterhaltige organische Gruppe ist, wobei das mittlere Molekulargewicht der Polymermoleküle zwischen 1000 und 1 000 000 liegt, wobei die mittleren Fraktionen der monomeren Einheiten je Polymermolekül innerhalb der folgenden Grenzen liegen:

$0{,}005 \leq p \leq 0{,}995$
$0 \leq q \leq 0{,}995$
$0 \leq r \leq 0{,}49$
$0 \leq s \leq 0{,}1$

wobei $0{,}005 \leq (q + 2r) \leq 0{,}995$ ist und wobei die monomeren Einheiten blockweise, alternierend oder beliebig in dem Molekül verteilt sein können und wobei das Kopolymer mindestens zwei Akrylatestergruppen je Molekül enthält.

2. Härtbare Kunststoffzusammensetzung nach Anspruch 1, dadurch gekennzeichnet, dass $R_5$ eine akrylatesterhaltige Alkylgruppe ist.

3. Härtbare Kunststoffzusammensetzung nach Anspruch 1 oder 2, dadurch gekennzeichnet, dass s grösser als 0,02 ist.

4. Härtbare Kunststoffzusammensetzung nach Anspruch 1, dadurch gekennzeichnet, dass r und s gleich Null sind und dass $R_1$ und $R_8$ akrylatesterhaltige Alkylgruppen sind.

5. Härtbare Kunststoffzusammensetzung nach Anspruch 1, dadurch gekennzeichnet, dass $R_5$ eine akrylatesterhaltige Polysiloxankette von demselben Typ und mit derselben mittleren Zusammensetzung wie die Hauptkette des Polymermoleküls ist.

6. Härtbare Kunststoffzusammensetzung nach einem der Ansprüche 1 bis 5, dadurch gekennzeichnet, dass $(q + 2r)$ grösser als 0,3 ist.

7. Härtbare Kunststoffzusammensetzung nach Anspruch 1, dadurch gekennzeichnet, dass die monomeren Akrylatverbindungen aus der Gruppe gewählt sind, die durch Hexandioldiakrylat, 2-Äthoxyäthylakrylat, 2′-Äthoxy-2-äthoxyäthylakrylat und Trimethylolpropantriakrylat gebildet wird.

**Claims**

1. A curable synthetic resin composition for cladding optical glass fibers, comprising a copolymer which has monomeric units comprising dimethyl siloxane and at least one siloxane selected from the group formed by methyl phenyl siloxane and diphenyl siloxane, characterized in that the synthetic resin composition contains up to 20% by weight of one or more monomeric acrylate compounds, and that the copolymer is a compound of the following formula:

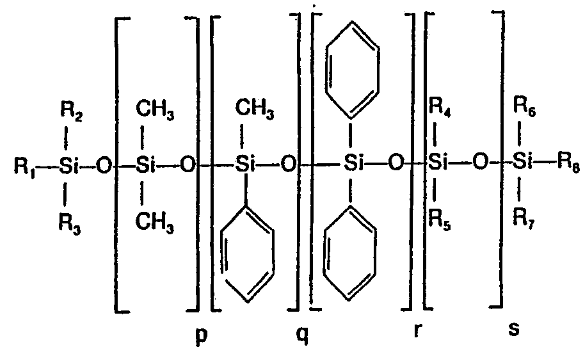

wherein $R_1$ and $R_8$ are organic groups which are selected from the group formed by alkyl groups, acryl groups and acrylate-ester-containing alkyl groups, wherein $R_2$, $R_3$, $R_4$, $R_6$ and $R_7$ are organics which are selected from the group formed by alkyl groups and aryl groups, and wherein $R_5$ is an acrylate-ester-containing organic group, the average molecular weight of the polymer molecules being 1,000 and 1 000 000, the average fractions of the monomeric units per polymer molecule being within the following limits:

$0.005 \leq p \leq 0.995$
$0 \leq q \leq 0.995$
$0 \leq r \leq 0.49$
$0 \leq s \leq 0.1$

wherein $0.005 \leq (q + 2r) \leq 0.995$ and wherein the monomeric units may be distributed in the molecule blockwise, alternatingly or at will, and in which the copolymer comprises at least two acrylate-ester groups per molecule.

2. A curable synthetic resin composition as claimed in Claim 1, characterized in that $R_5$ is an acrylate-ester-containing alkyl group.

3. A curable synthetic resin composition as claimed in Claim 1 or 2, characterized in that s exceeds 0.02.

4. A curable synthetic resin composition as claimed in Claim 1, characterized in that r and s are equal to zero and $R_1$ and $R_8$ are acrylate-ester-containing alkyl groups.

5. A curable synthetic resin composition as claimed in Claim 1, characterized in that $R_5$ is a acrylate-ester-containing polysiloxane chain of the same type and of the same average composition as the main chain of the polymer molecule.

6. A curable synthetic resin composition as claimed in any of the Claims 1 to 5, characterized in that (q + 2r) exceeds 0.3.

7. A curable synthetic resin composition as claimed in Claim 1, characterized in that the monomeric acrylate compounds are selected from the group formed by hexanediol diacrylate, 2-ethoxy-ethyl acrylate, 2'-ethoxy-2-ethoxy-ethyl acrylate and trimethylol propane triacrylate.

**Revendications**

1. Composition de matière synthétique durcissable pour le revêtement de fibres optiques en verre d'un copolymère, contenant comme unités monomères du diloxane de diméthyle et au moins un siloxane du groupe formé par le siloxane de méthylphényle et le siloxane de diphényle, caractérisée en ce que la composition de matière synthétique durcissable contient jusqu'à 20% en poids d'un ou de plusieurs monomères de composés d'acrylates et contenant un copolymère qui est un composé de la formule suivante:

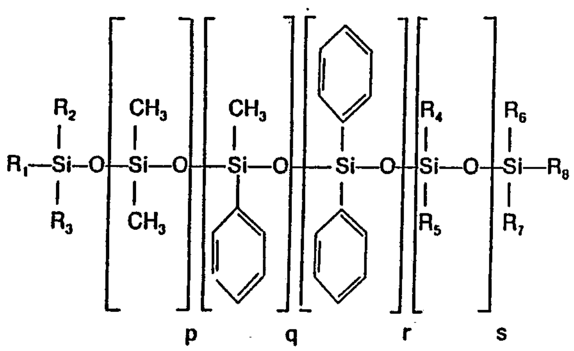

dans laquelle $R_1$ et $R_8$ sont des groupes organiques qui sont choisis dans le groupe constitué par des groupes alkyle, des groupes aryle et des groupes alkyle contenant des groupes d'ester d'acide acrylique, dans laquelle $R_2$, $R_3$, $R_4$, $R_6$ et $R_7$ sont des groupes organiques qui sont choisis dans le groupe constitué par des groupes alkyle et des groupes aryle, et dans laquelle $R_5$ est un groupe organique contenant des groupes d'ester d'acide acrylique, le poids moléculaire moyen des molécules polymères étant compris entre 1000 et 1 000 000, les fractions moyennes des unités monomères par molécule polymère étant situées dans des limites suivantes:

$0,005 \leq p \leq 0,995$
$0 \leq q \leq 0,995$
$0 \leq r \leq 0,49$
$0 \leq s \leq 0,1,$

dans lesquelles $0,005 \leq (q + 2r) \leq 0,995$ et dans lesquelles les unités monomères peuvent être réparties par blocs, de façon alternante ou arbitraire dans la molécule et dans lesquelles le copolymère contient par molécule au moins deux groupes d'ester d'acide acrylique.

2. Composition de matière synthétique durcissable selon la revendication 1, caractérisée en ce que $R_5$ est un groupe alkyle contenant des groupes d'ester d'acide acrylique.

3. Composition de matière synthétique durcissable selon la revendication 1 ou 2, caractérisée en ce que s est supérieur à 0,02.

4. Composition de matière synthétique durcissable selon la revendication 1, caractérisée en ce que r et s sont égaux à zéro et $R_1$ et $R_8$ sont des groupes alkyle contenant des groupes d'ester d'acide acrylique.

5. Composition de matière synthétique durcissable selon la revendication 1, caractérisée en ce que $R_5$ est une chaîne de polysiloxane contenant des groupes d'ester d'acide acrylique du même genre et présentant la même composition moyenne que la chaîne principale de la molécule polymère.

6. Composition de matière synthétique durcissable selon l'une des revendications 1 à 5, caractérisée en ce que $(q + 2r)$ est supérieur à 0,3.

7. Composition de matière synthétique durcissable selon la revendication 1, caractérisée en ce que les composés d'acrylates monomères sont choisis dans le groupe formé par le diacrylate d'hexanediol, l'acrylate de 2-éthoxyéthyle, l'acrylate de 2'-éthoxy-2-éthoxyéthyle et le triacrylate de triméthylolpropane.

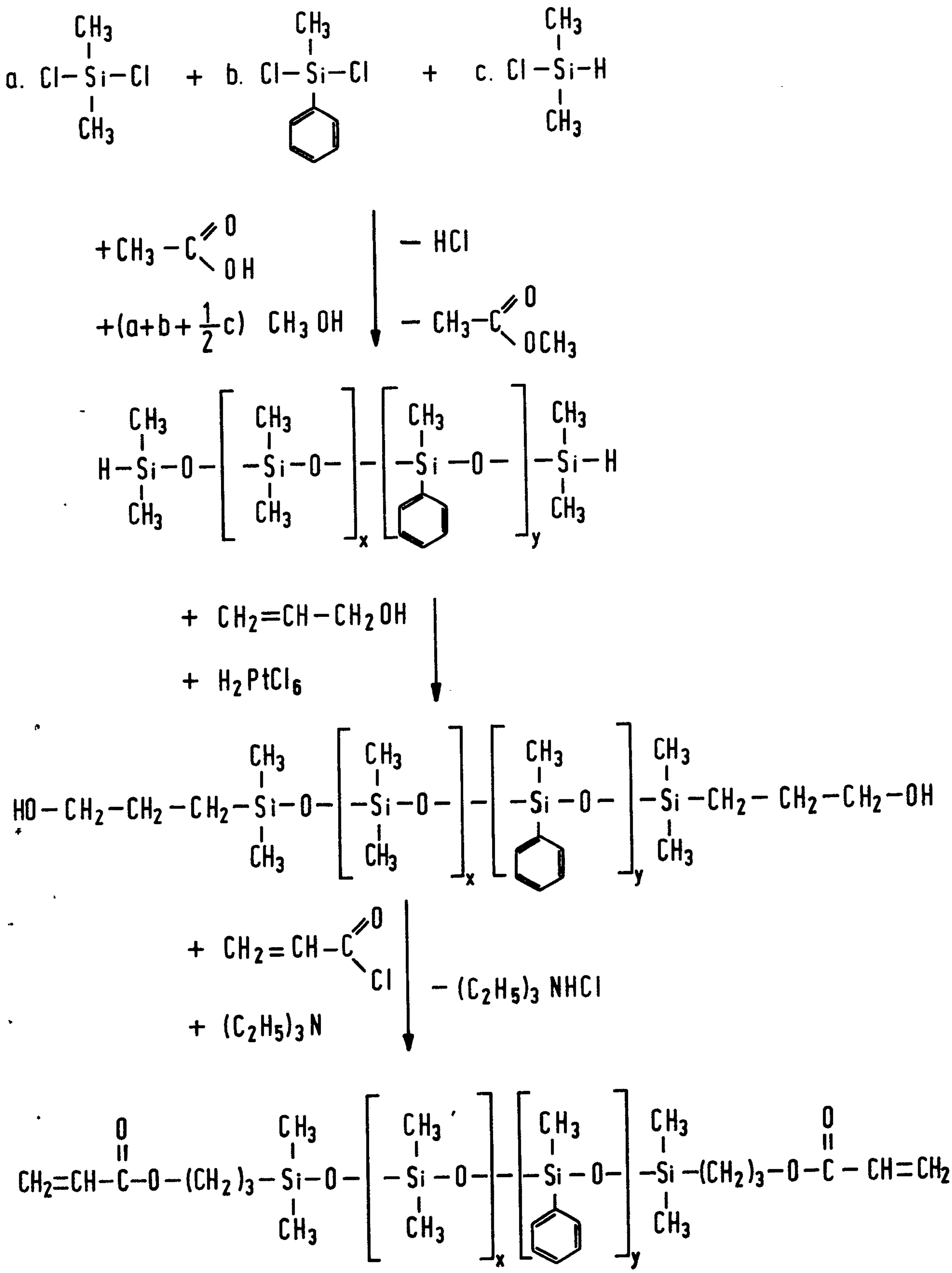


FIG.1

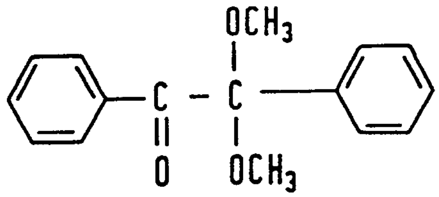

a

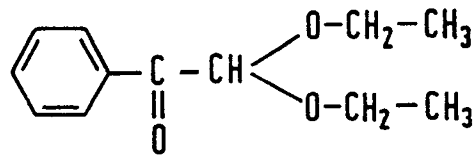

b

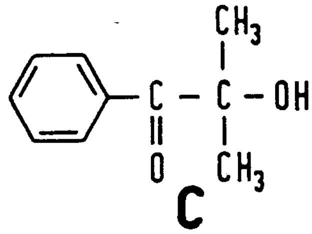

c

FIG.2

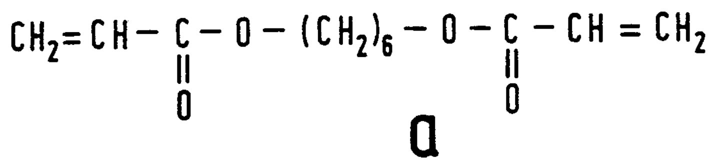

a

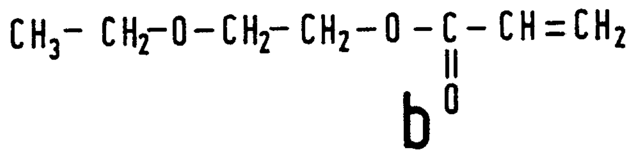

b

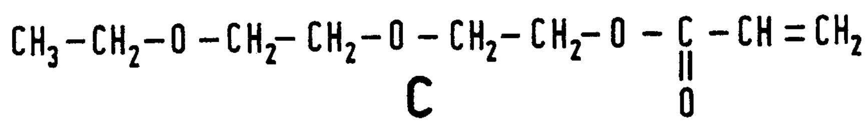

c

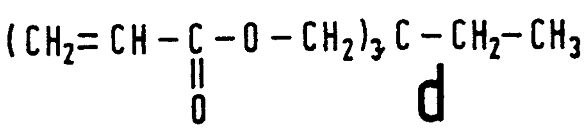

d

FIG.3